# EUROPÄISCHE PATENTSCHRIFT

(11) **EP 1 048 199 B1**
(45) Veröffentlichungstag und Bekanntmachung des Hinweises auf die Patenterteilung: **14.01.2004**
(21) Anmeldenummer: 00108212.2
(22) Anmeldetag: 14.04.2000
(51) Int. Cl.: A01D 57/02

(54) **Haspel für eine Erntegutbergungseinrichtung**
Reel for a harvesting machine
Rabatteur pour machine de récolte

(30) Priorität: 28.04.1999 US 301293
(43) Veröffentlichungstag der Anmeldung: 02.11.2000
(73) Patentinhaber: DEERE & COMPANY, Moline, Illinois 61265-8098 (US)
(72) Erfinder: Coers, Bruce Alan, Hillsdale, IL 61257 (US); Jensen, Roderick James, Moline, IL 61265 (US)
(74) Vertreter: Holst, Sönke, Dr.

(56) Entgegenhaltungen:
- EP-A- 0 280 790
- US-A- 2 694 894
- US-A- 3 472 008
- US-A- 5 768 870
- DATABASE WPI Section PQ, Week 199134 Derwent Publications Ltd., London, GB; Class P12, AN 1991-251390 XP002141465 & SU 1 598 904 A (SHMARIN N S), 15. Oktober 1990 (1990-10-15)

## Beschreibung

Die Erfindung betrifft eine Erntegutbergungsvorrichtung, insbesondere Schneidwerk, mit einer daran drehbar angebrachten Haspel, die mit wenigstens einer drehbaren Schwenkwelle, an der Zinken mit Spitzen befestigt sind, und mit einer Verstellvorrichtung versehen ist, die eingerichtet ist, die Drehstellung der Schwenkwelle relativ zum Erdboden in Abhängigkeit von der Drehstellung der Haspel zu ändern, wobei die Verstellvorrichtung eingerichtet ist, die Schwenkwelle in einem ersten Winkelbereich der Haspel, der einer Annäherungszone der Zinken einer Schwenkwelle an eine Mäheinrichtung entspricht, derart zu drehen, dass sich die Spitzen der Zinken auf einer im wesentlichen horizontalen Bahn bewegen und in einem zweiten Winkelbereich, der sich an den ersten Winkelbereich anschließt, derart zu drehen, dass die Zinken im zweiten Winkelbereich relativ zum Erdboden in einer ersten Richtung gedreht werden, so dass die Spitzen der Zinken in einer Anhebezone über eine Mäheinrichtung gehoben werden.

Es ist aus der US 4 008 558 A bekannt, eine Haspel für das Schneidwerk einer Erntemaschine mit Zinken zu versehen, die eine konstante Stellung relativ zum Erdboden einnehmen. Die Bahnen der Spitzen der Zinken sind kreisförmig. Eine Vielzahl in seitlicher Richtung beabstandeter Sterne mit radial nach außen weisenden Armen, an denen außenseitig Schwenkwellen angeordnet sind, ist an der Welle der Haspel angebracht. Die Schwenkwellen sind durch Kurbelarme mit exzentrischen Elementen an den Enden der Haspel gekoppelt. Zinken sind an jeder Schwenkwelle angebracht, und die Schwenkwellen drehen sich während der Drehung der Haspel relativ zu den Armen der Sterne, so dass die Zinken eine konstante Stellung relativ zum Erdboden einhalten.

Ein ähnlicher Mechanismus ist in der US 5 768 870 A und der EP 0 280 790 A gezeigt. Dort stellt der Verbindungsmechanismus, der die Orientierung der Zinken steuert, eine nicht-kreisförmige Umlaufbahn der Spitzen der Zinken bereit. Die Orientierung oder Stellung der Zinken relativ zum Erdboden bleibt in dem Bereich, in dem sie sich mit dem Erntegut in Eingriff befinden, konstant.

In den drei genannten Patentschriften wird die Orientierung der Zinken durch eine Scheibe gesteuert, die exzentrisch zur Drehachse der Haspel angeordnet ist. Von der Scheibe erstrecken sich Verbindungen radial nach außen, die an Kurbelarme gekoppelt sind, welche an den Schwenkwellen befestigt sind. Bei einem derartigen Mechanismus ist die Bahn der Spitze der Zinken festgelegt und kann nicht durch den Benutzer eingestellt werden. Bei einigen Haspeln, wie beispielsweise der in der US 4 008 558 A offenbarten, ist ein Mechanismus bereitgestellt, durch den die Stellung der Zinken durch den Benutzer eingestellt werden kann, um das Erntegut in einem höheren oder geringeren Maße anzuheben. Während die Stellung der Zinken relativ zum Erdboden eingestellt werden kann, ist die von den Spitzen der Zinken beschriebene Bahn stets kreisförmig.

Andere Mechanismen zur Steuerung der Orientierung der Zinken sind in der US 5 007 235 A, US 5 566 536 A und US 5 595 093 A wiedergegeben. Diese Patentschriften zeigen Kurvenbahnen zur Steuerung der Orientierung der Zinken. Die Kurvenbahnen können kreisförmig oder unregelmäßig geformt sein, um verschiedene Bahnen und Orientierungen der Zinken herbeizuführen. Ein Nachteil des Standes der Technik ist die fehlende Möglichkeit, die Bahnen der Zinken oder ihre Orientierungen zur Anpassung an unterschiedliche Bedingungen zu ändern.

Die SU 1 598 904 A beschreibt eine weitere Erntegutbergungseinrichtung mit einer Haspel, deren Finger durch Kurvenbahnen gesteuert werden. In einer Ausführungsform ist die Bahn der Fingerspitzen vor dem Mähbalken horizontal. Vor dem Mähbalken werden die Fingerspitzen nach hinten angehoben. Der Boden des Schneidwerks ist stromab des Mähbalkens flach, so dass es beispielsweise beim bergab fahren denkbar ist, dass Erntegut wieder hinabfällt.

Die der Erfindung zugrunde liegende Aufgabe wird darin gesehen, einen verbesserten Mechanismus zur Einstellung der Orientierung der Zinken einer Haspel bereitzustellen, bei dem die Spitzen der Zinken einen guten Eingriff in das aufzunehmende Erntegut haben.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, die zur Steuerung des Drehwinkels der Schwenkwelle-und somit der Orientierung der Zinken relativ zum Erdboden - dienende Verstelleinrichtung so zu gestalten, dass sich die Spitzen der Zinken einer Schwenkwelle in einem ersten Winkelbereich der Haspel, welcher vor einer Mäheinrichtung der Erntegutbergungsvorrichtung liegt, auf einer im wesentlichen horizontalen Bahn bewegen. Der erste Winkelbereich kann somit auch als Annäherungszone an die Mäheinrichtung bezeichnet werden. Auf diese Weise wird der Erdboden vor der Mäheinrichtung von den Spitzen der Zinken überstrichen und auf dem Erdboden liegendes Erntegut problemlos der Erntegutbergungsvorrichtung zugeführt. An den ersten Winkelbereich der Haspel schließt sich ein zweiter Winkelbereich an, in dem die Spitzen der Zinken relativ zum Erdboden in einer ersten Richtung gedreht und über eine Mäheinrichtung und über den Boden der Erntegutbergungseinrichtung gehoben werden. Der zweite Winkelbereich kann auch als Anhebezone bezeichnet werden. Die Spitzen der Zinken werden über eine Absperrkante für Erntegut, die sich stromab einer Mäheinrichtung befindet, gehoben.

Im ersten und zweiten Winkelbereich drehen sich die Zinken relativ zum Erdboden in der Regel in derselben (ersten) Richtung.

An den zweiten Winkelbereich der Haspel kann sich ein dritter Winkelbereich anschließen. Im dritten Winkelbereich, der auch als Freigabezone bezeichnet werden kann, wird die Schwenkwelle jedoch zweckmäßigerweise relativ zum Erdboden in eine zweite Richtung gedreht, die der ersten Richtung entgegengesetzt ist. Auf diese Weise geben die Zinken das von ihnen aufgenommene Erntegut frei und legen es auf der Erntegutbergungsvorrichtung ab. Außerdem wird ein Zusammenstoß der Spitzen der Zinken mit einem Schneckenförderer der Erntegutbergungsvorrichtung vermieden.

Im ersten und zweiten Winkelbereich sind die Zinken vorzugsweise in einem voreilenden Winkel relativ zu einer zur Haspel radialen Ebene angeordnet. Die genannte Ebene verläuft durch die jeweilige Schwenkwelle und durch die Drehachse der Haspel. Es wird auf diese Weise gewährleistet, dass die Zinken das Erntegut aggressiv aufnehmen und fördern. Dabei ist der Winkel im zweiten Winkelbereich in der Regel weiter voreilend als im ersten Winkelbereich. Im dritten Winkelbereich ist der Winkel jedoch vorzugsweise gegenüber einer zur Haspel radialen Ebene nacheilend, um die Abgabe des Ernteguts zu gewährleisten. Die genannte Ebene verläuft ebenfalls durch die jeweilige Schwenkwelle und die Drehachse der Haspel.

Als Verstelleinrichtung kann ein Exzenter verwendet werden, wie er aus der US 4 008 558 A bekannt ist. Bevorzugt ist jedoch die Verwendung eines Steuerelements, das mittels eines Kurbelarms auf die Schwenkwelle einwirkt und ihre Drehstellung definiert. Das ortsfeste, also nicht mit der rotativ angetriebenen Haspel rotierende Steuerelement kann an einem oder beiden Enden der Haspel angebracht werden. In der Regel werden zwei Steuerelemente verwendet, es ist aber auch denkbar, nur eines zu benutzen. Das Steuerelement ist vorzugsweise ringförmig, und in der Nähe der Schwenkwellen angebracht. Das Steuerelement kann eine endlose, die Welle der Haspel umrundende Kurvenbahn aufweisen, welche vorzugsweise in Form eines in das Steuerelement eingebrachten Kanals realisiert ist. In die Kurvenbahn greift ein Kurvenabnehmer ein, der über einen Kurbelarm die Schwenkwelle dreht. Alternativ wäre denkbar, dass der Kurvenabnehmer an einer (insbesondere äußeren oder inneren) Oberfläche des Steuerelements anliegt, und ggf. mit einer Federkraft beaufschlagt wird, die ihn gegen diese Oberfläche presst. Sich radial von der Welle der Haspel nach außen erstreckende, sternförmig angeordnete Arme tragen die Schwenkwellen. Wenn sich die Haspel dreht, bewegen die sich radial erstreckenden Arme die Schwenkwellen auf einer kreisförmigen Bahn um die Welle der Haspel. Die Kurvenabnehmer laufen den Schwenkwellen in der Regel nach und ihre Position relativ zu den Schwenkwellen variiert entsprechend der in dem Steuerelement definierten Kurvenbahn, so sich dass der Winkel der Schwenkwellen relativ zum Erdboden kontinuierlich ändert. Die Kurvenbahn definiert somit die Bahn der Spitzen der Zinken. Ein Vorteil der Verwendung eines Steuerelements mit einer Kurvenbahn besteht darin, dass beliebige Kurvenformen und somit Drehwinkel der Schwenkwelle realisierbar sind. Es ist denkbar, Steuerelemente mit unterschiedlichen Kurvenbahnen zu verwenden, um verschiedene Bahnen der Spitzen der Zinken zu realisieren. Vorzugsweise ist das Steuerelement aus einzelnen Segmenten zusammengesetzt, die an ihren Enden zusammengefügt sind.

Entfernbare Befestigungselemente können zum Befestigen der Segmente des Steuerelements benutzt werden, so dass ein oder mehrere Segmente entfernt und ausgetauscht werden können. Dadurch wird möglich, einen Teil der Bahn der Spitzen der Zinken zu variieren, insbesondere den Teil der Bahn durch die Zone, in der die Zinken in das Erntegut eingreifen, es aufnehmen und es auf der Erntegutbergungsvorrichtung ablegen. Das Steuerelement kann zur Vereinfachung der Fertigung komplexer Formen der Kurvenbahn und zur Verminderung des Gewichts gegenüber gegossenen Metall-Steuerelementen aus Kunststoffmaterial hergestellt sein. In der Guteingriffszone unterliegt das Steuerelement einer höheren Abnutzung. Durch die Fertigung des Steuerelements aus mehreren Segmenten reicht es aus, nur die von Verschleiß betroffenen Segmente auszutauschen.

Die Erfindung kann bei beliebigen Erntegutbergungsvorrichtungen mit Haspeln verwendet werden, wie Schneidwerken oder Pick-Ups.

In den Zeichnungen ist ein nachfolgend näher beschriebenes Ausführungsbeispiel der Erfindung dargestellt. Es zeigt:
- Fig. 1: eine Seitenansicht eines Schneidwerks mit einer erfindungsgemäßen Haspel;
- Fig. 2: eine Seitenansicht des Schneidwerks, in der die Zinkenhöhe und der Weg der Zinkenspitzen beim Umlauf um die Haspel dargestellt sind; und
- Fig. 3: eine vergrößerte Teilansicht, in der der Aufbau des Steuerelements und das Zusammenwirken mit den Kurvenabnehmer wiedergegeben ist.

Die Erfindung ist in einem Schneidwerk verwirklicht, das in seiner Gesamtheit mit dem Bezugszeichen 10 gekennzeichnet ist. Das Schneidwerk 10 umfasst einen Schneidwerksrahmen 12 und linke und rechte Seitenwände 14, von denen nur eine gezeigt ist. Ein Boden 16 erstreckt sich zwischen den gegenüberliegenden Seitenwänden 14. Ein sich quer erstreckender Schneckenförderer 18 zum Zusammenführen von Erntegut ist oberhalb des Bodens 16 und in Vorwärtsbewegungsrichtung vor einer Rückwand 20 des Schneidwerks 10 befestigt. Ein sich ebenfalls quer erstreckender Mähwerksbalken 22 ist als Mäheinrichtung an der vorderen Kante des Bodens 16 angebracht und eine aufrecht angeordnete Absperrkante 23 für Erntegut ist .zwischen dem Mähwerksbalken 22 und dem Boden 16 befestigt.

Eine insgesamt mit dem Bezugszeichen 24 gekennzeichnete Haspel des Aufsammel-Typs erstreckt sich über die Breite des Schneidwerks 10, vor dem Schneckenförderer 18 und oberhalb des Mähwerksbalkens 22. Die Haspel 24 ist am Schneidwerk 10 mittels eines Paares sich im wesentlichen von vorn nach hinten erstreckender Haspelträgerarme 26 befestigt, die mit dem Rahmen 12 des Schneidwerks 10 an ihren hinteren Enden durch quer zur Vorwärtsbewegungsrichtung verlaufende Schwenklager 28 verbunden sind. Die Haspelträgerarme 26 sind im wesentlichen oberhalb der linken und rechten Seitenwände 14 angeordnet. Die Haspelträgerarme 26 sind mittels eines Paares von Zylindern 30 vertikal verstellbar, die sich zwischen den Haspelträgerarmen 26 und den Seitenwänden 14 abstützen.

Am vorderen Ende jedes Haspelträgerarms 26 ist eine hülsenartige Trägerstruktur 32 befestigt. Die Trägerstrukturen. 32 sind in ihrer Position entlang des Haspelträgerarms 26 verschiebbar und werden durch ein zweites Paar von Zylindern 34 festgehalten.

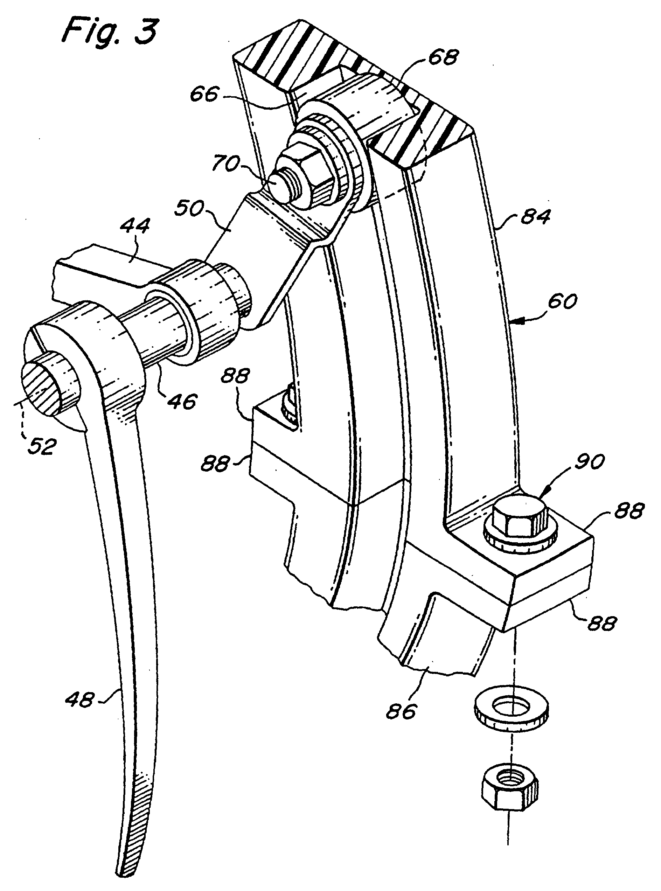

Eine röhrenförmige Welle 40 der Haspel 24 ist drehbar an den gegenüberliegenden Trägerstrukturen 32 gelagert und erstreckt sich zwischen ihnen. Die Welle 40 der Haspel 24 hat eine Anzahl radial beabstandeter, radial verlaufender Elemente oder Sterne 42. In der dargestellten Ausführungsform hat jeder der Sterne 42 sechs sich radial erstreckende Arme 44, die axial miteinander ausgerichtet sind. Eine sich quer erstreckende Schwenkwelle 46 ist drehbar an den äußeren Enden jedes Satzes axial ausgerichteter, sich radial erstreckender Arme 44 gelagert und erstreckt sich über die Breite der Haspel 24. Jede Schwenkwelle 46 trägt eine große Anzahl daran befestigter harkenartiger Finger oder Zinken 48. Kurbelarme 50 sind an den gegenüberliegenden Enden jeder Schwenkwelle 46 angebracht und drehen sich mit den Schwenkwellen 46 um die Achse 52 (Figur 3) jeder Schwenkwelle 46.

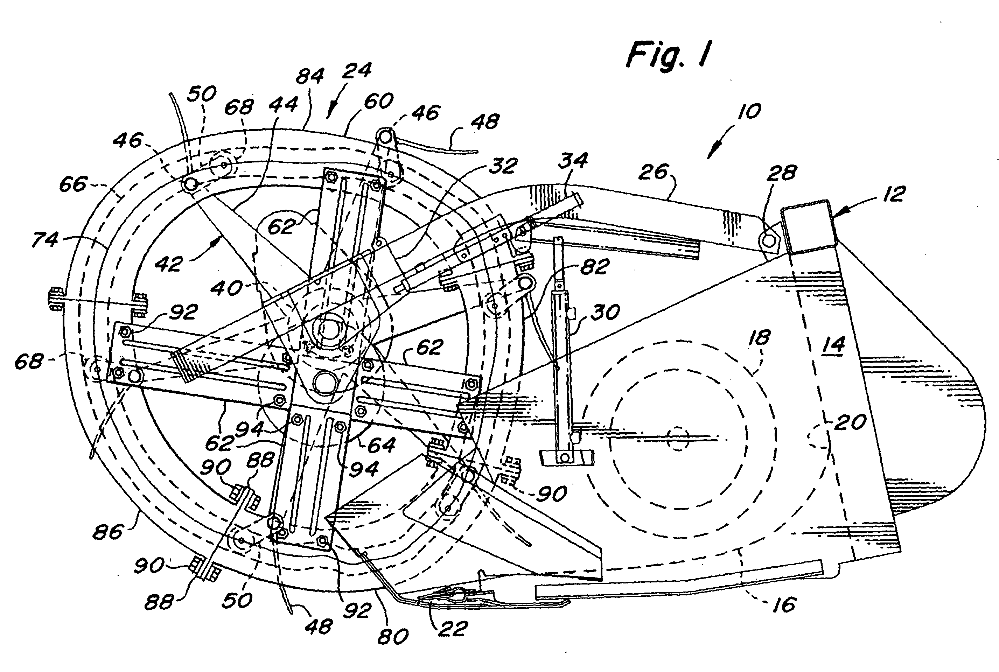

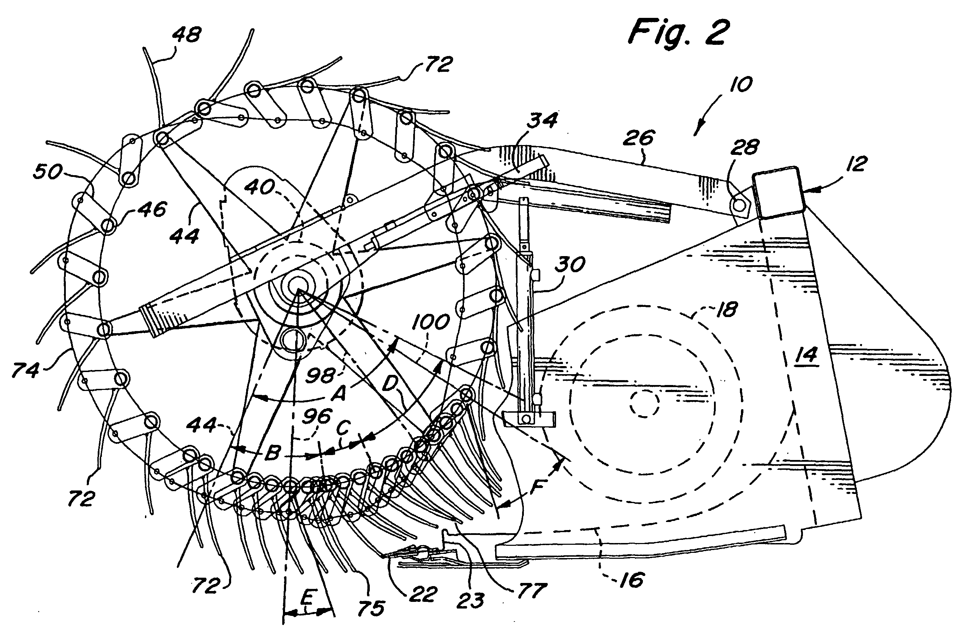

Ein Paar von Steuerelementen 60 steuert die jeweiligen Winkel der Schwenkwellen 46 und der Kurbelarme 50. An jedem Ende der Haspel 24 ist ein Steuerelement 60 angeordnet. Jedes Steuerelement 60 ist an einer Vielzahl von Speichen 62 befestigt, die an den Trägerstrukturen 32 mittels einer Platte 64 jeder Trägerstruktur 32 angebracht sind. Die zwei Steuerelemente 60 definieren parallele Kurvenbahnen. Ein Steuerelement 60 ist detaillierter in Figur 3 dargestellt. Das Steuerelement 60 ist ein aus Kunststoff gegossener Ring mit einem darin eingebrachten Kanal 66. Dadurch, dass das Steuerelement 60 aus Kunststoff gegossen ist, ist das Gewicht an der Vorderseite des Schneidwerks 10 im Vergleich mit einem aus Metall gegossenen Steuerelement 60 vermindert. Der Kanal 66 definiert eine endlose Kurvenbahn, die durch die Linie 74 in Figuren 1 und 2 wiedergegeben wird. Ein Kurvenabnehmer 68 in Form einer Rolle ist an jedem Kurbelarm 50 drehbar durch einen Drehbolzen 70 gelagert. Die Kurvenabnehmer 68 sind in den Kanälen 66 angeordnet und folgen der Kurvenbahn. Die Kurvenbahn ist derart angeordnet, dass die Schwenkwellen 46 sich bei jeder Umdrehung der Haspel 24 relativ zum Erdboden um 360 Grad drehen.

In der Figur 2 wird der Weg der Spitzen 72 der Zinken 48 bei ihrer Bewegung um die Haspel 24 detaillierter wiedergegeben. Ein Bereich, in dem die Zinken 48 in Eingriff mit dem Erntegut gelangen, ist zwischen den zwei radialen Linien dargestellt, die den Winkel "A" definieren. Dieser Winkel liegt näherungsweise zwischen der 7-Uhr-Position und der 4-Uhr-Position, wobei sich die Haspel 24 im Gegenuhrzeigersinn dreht. Der Bereich, in dem die Zinken 48 im Eingriff mit Erntegut sind, hat verschiedene Zonen, in denen die Stellung der Zinken variiert wird, um vorteilhafte Ergebnisse in der Behandlung des Gutes zu erzielen. Die Zinken 48 bewegen sich durch eine Annäherungszone, die in Figur 2 mit "B" gekennzeichnet ist, in der sich die Zinken 48 von der Haspel 24 radial nach außen erstrecken, und in der die Spitzen 72 der Zinken 48 sich auf einem im wesentlichen horizontalen Weg bewegen, um den Erdboden vor dem Mähwerksbalken 22 zu überstreichen. Die Annäherungszone entspricht einem ersten Winkelbereich der Haspel 24. Die Schwenkwellen 46 drehen sich relativ zum Erdboden geringfügig, - bezüglich der Figur 2 im Gegenuhrzeigersinn - um die Spitzen 72 der Zinken 48 auf einem im wesentlichen horizontalen Weg zu halten. Die Annäherungszone B endet näherungsweise an der in Figur 2 mit dem Bezugszeichen 75 gekennzeichneten Spitze eines Zinkens 48.

Nach der Annäherungszone B bewegen sich die Zinken 48 durch eine Anhebezone, die einem zweiten Winkelbereich der Haspel 24 entspricht und in Figur 2 mit "C" gekennzeichnet ist, in der die Schwenkwellen 46 sich weiter relativ zum Erdboden im Gegenuhrzeigersinn drehen, um die Spitzen 72 der Zinken 48 und das Erntegut über den Mähwerksbalken 22 und die Absperrkante 23 für Erntegut zu heben. Die Anhebezone C endet näherungsweise an der in Figur 2 mit dem Bezugszeichen 77 gekennzeichneten Spitze 77 eines Zinkens 48. Nach der Anhebezone C bewegen sich die Zinken 48 oberhalb des Vorderabschnitts des Bodens 16 des Schneidwerks 10. Dort ist der Anfang einer Freigabezone, die in Figur 2 mit "D" gekennzeichnet ist. Die Freigabezone entspricht einem dritten Winkelbereich der Haspel 24. In der Freigabezone D werden die Schwenkwellen 46 relativ zum Erdboden im Uhrzeigersinn gedreht. Dadurch wird es an den Zinken 48 anhaftendem Erntegut ermöglicht, auf das Schneidwerk 10 zu fallen, während die Zinken 48 eine vertikalere Orientierung annehmen. Die Zinken 48 drehen sich auch nach dem Verlassen der Freigabezone D im Uhrzeigersinn, um nicht mit dem Schneckenförderer 18 zusammenzustoßen. Die Drehung der Zinken 48 im Uhrzeigersinn in und nach der Freigabezone D erlaubt den Zinken 48, die Vorderseite des Bodens 16 zu überstreichen und trotzdem den Schneckenförderer 18 nicht zu berühren.

Die hier verwendeten Begriffe "im Uhrzeigersinn" und "im Gegenuhrzeigersinn" beziehen sich auf die in den Figuren 1 und 2 wiedergegebenen Ansichten des Schneidwerks 10. Sie sind nicht als einschränkende Begriffe zu betrachten, außer dass sich die Schwenkwellen 46 zuerst in eine Richtung und dann in einem Bereich, in dem die Zinken im Eingriff mit dem Erntegut sind, in die entgegengesetzte Richtung drehen.

In der Annäherungszone B sind die Zinken 48 relativ zur radialen Ebene 96 in einem voreilenden Winkel angeordnet. Dieser voreilende Winkel wird durch den Winkel E gekennzeichnet. Der Winkel E des Zinken 48 ist relativ zur radialen Ebene 96 in der im Gegenuhrzeigersinn verlaufenden Drehrichtung der Haspel 24 vorlaufend oder voreilend. In der Freigabezone D drehen sich die Schwenkwellen 46 im Uhrzeigersinn, wobei die Zinken 48 einen Nullwinkel mit der radialen Ebene 98 durchlaufen, bis sie einen nacheilenden Winkel an der radialen Ebene 100 erreichen. Zwischen der 10-Uhr-Position und der 11-Uhr-Position drehen sich die Schwenkwellen 46 im Gegenuhrzeigersinn, um die Zinken 48 zur Vorbereitung in den Wiedereintritt in die Annäherungszone in einen voreilenden Winkel zu klappen.

Anhand der Figuren 1 und 3 ist erkennbar, dass das Steuerelement 60 aus mehreren Segmenten 80, 82, 84 und 86 aufgebaut ist. Die Segmente 80, 82, 84, 86 sind mit radialen Befestigungsflanschen 88 an jedem Ende der Segmente 80, 82, 84, 86 hergestellt. Die Befestigungsflansche 88 sind durch Befestigungszusammenbauten 90 mit Muttern und Schrauben aneinander befestigt. Jedes Segment 80, 82, 84, 86 ist gekrümmt, um die endlose Kurvenbahn zu erzeugen, wenn die Segmente 80, 82, 84, 86 an ihren Enden zusammengefügt werden. Die einzelnen Segmente 80, 82, 84, 86 können sich über unterschiedliche Winkelbereiche erstrecken.

Wenn eine andere Bewegung oder Wirkung der Zinken 48 gewünscht wird, beispielsweise in dem Bereich, in dem sie sich mit dem Erntegut in Eingriff befinden, kann das Segment 80 entfernt und durch ein anderes Segment mit einer anderen Kurvenbahn ersetzt werden. Das Segment 80 ist im Bereich, in dem die Zinken 48 auf das Erntegut einwirken, angeordnet, und daher einer größeren Abnutzung als die anderen Segmente 82, 84, 86 ausgesetzt. Das Segment 80 kann daher auch ausgetauscht werden, falls es zu stark abgenutzt ist, ohne dass es nötig wäre, das gesamte Steuerelement 60 auszuwechseln.

Die Speichen 62 sind außerdem am Steuerelement 60 mit abnehmbaren Befestigungen 92 fixiert, wie Zusammenbauten mit Schrauben und Muttern, um das Entfernen und Ersetzen eines oder mehrerer Segmente 80, 82, 84, 86 zu erleichtern. Außerdem sind die Speichen 62 auch an der Platte 64 durch entfernbare Befestigungen 94 angebracht.

Das Steuerelement 60, das in Figur 1 mit vier Segmenten 80, 82, 84, 86 dargestellt ist, ist nur ein Beispiel für ein erfindungsgemäßes, aus Segmenten aufgebautes Steuerelement. Das Steuerelement 60 kann aus einer beliebigen Anzahl von Segmenten aufgebaut sein. Die Erfindung beschränkt sich nicht auf ein Steuerelement 60 mit vier Segmenten 80, 82, 84, 86.

Die Verwendung des erfindungsgemäßen Steuerelements 60 für die Steuerung der Höhe der Zinken 48 der Haspel 24 stellt die Möglichkeit bereit, die Höhe der Zinken 48 und des von den Spitzen 72 der Zinken 48 beschrittenen Wegs zu ändern. Außerdem können durch das Segmentieren des Steuerelements 60 einzelne Segmente 80, 82, 84, 86, die einer erhöhten Abnutzung unterliegen, leicht ausgetauscht werden, ohne dass es nötig ist, das ganze Steuerelement 60 zu ersetzen. Das Steuerelement 60 ist vorzugsweise aus Kunststoff hergestellt. Das erleichtert die Herstellung eines Steuerelements 60 mit einer komplexen Form und einem verminderten Gewicht. Das Steuerelement kann in anderen Verfahren als Gießverfahren und aus anderen Materialien, wie beispielsweise, aber nicht eingeschränkt auf, gepresstem Stahl oder Gusseisen hergestellt sein.

## Patentansprüche

1. Erntegutbergungsvorrichtung, insbesondere Schneidwerk (10), mit einer daran drehbar angebrachten Haspel (24), die mit wenigstens einer drehbaren Schwenkwelle (46), an der Zinken (48) mit Spitzen (72) befestigt sind, und mit einer Verstellvorrichtung versehen ist, die eingerichtet ist, die Drehstellung der Schwenkwelle (46) relativ zum Erdboden in Abhängigkeit von der Drehstellung der Haspel (24) zu ändern, wobei die Verstellvorrichtung eingerichtet ist, die Schwenkwelle (46) in einem ersten Winkelbereich der Haspel (24), der einer Annäherungszone (B) der Zinken (48) einer Schwenkwelle (46) an eine Mäheinrichtung entspricht, derart zu drehen, dass sich die Spitzen (72) der Zinken (48) auf einer im wesentlichen horizontalen Bahn bewegen und in einem zweiten Winkelbereich, der sich an den ersten Winkelbereich anschließt, derart zu drehen, dass die Zinken (48) im zweiten Winkelbereich relativ zum Erdboden in einer ersten Richtung gedreht werden, so dass die Spitzen (72) der Zinken (48) in einer Anhebezone (C) über die Mäheinrichtung gehoben werden, **dadurch gekennzeichnet, dass** sich stromab der Mäheinrichtung eine Absperrkante (23) für Erntegut befindet, und dass die Verstellvorrichtung eingerichtet ist, die Schwenkwelle (46) im zweiten Winkelbereich derart zu drehen, dass die Zinken (48) über die Absperrkante (23) gehoben werden.

2. Erntegutbergungsvorrichtung nach Anspruch 1, **dadurch gekennzeichnet, dass** die Verstelleinrichtung eingerichtet ist, die Schwenkwelle (46) im ersten Winkelbereich und im zweiten Winkelbereich in eine erste Richtung zu drehen.

3. Erntegutbergungsvorrichtung nach einem der vorhergehenden Ansprüche, **dadurch gekennzeichnet, dass** die Verstelleinrichtung eingerichtet ist, die Schwenkwelle (46) in einem dritten Winkelbereich, der dem zweiten Winkelbereich folgt, in eine zweite Richtung zu drehen, die der Drehrichtung im ersten Winkelbereich entgegengesetzt ist, so dass die Zinken (48) in einer Freigabezone (D) Erntegut freigeben und ein Abstand zwischen den Zinken (48) und einem Schneckenförderer (18) der Erntegutbergungsvorrichtung gewährleistet ist.

4. Erntegutbergungsvorrichtung nach einem der Ansprüche 1 bis 3, **dadurch gekennzeichnet, dass** die Verstelleinrichtung eingerichtet ist, die Schwenkwelle (46) derart zu drehen, dass die Zinken (48) im ersten und zweiten Winkelbereich in einem voreilenden Winkel (E) relativ zu einer zur Haspel (24) radialen Ebene (96) sind.

5. Erntegutbergungsvorrichtung nach einem der Ansprüche 1 bis 4, **dadurch gekennzeichnet, dass** die Verstelleinrichtung eingerichtet ist, die Schwenkwelle (46) derart zu drehen, dass die Zinken (48) im zweiten Winkelbereich relativ zu einer zur Haspel (24) radialen Ebene in einen gegenüber dem Winkel (E) im ersten Winkelbereich in höherem Maße voreilenden Winkel gedreht werden.

6. Erntegutbergungsvorrichtung nach einem der Ansprüche 3 bis 5, **dadurch gekennzeichnet, dass** die Verstelleinrichtung eingerichtet ist, die Schwenkwelle (46) derart zu drehen, dass die Zinken (48) im dritten Winkelbereich einen Winkel einnehmen, der relativ zu einer zur Haspel (24) radialen Ebene (100) nachlaufend ist.

7. Erntegutbergungsvorrichtung nach einem der Ansprüche 1 bis 6, **dadurch gekennzeichnet, dass** die Verstellvorrichtung ein vorzugsweise ringförmiges Steuerelement (60) umfasst, das eingerichtet ist, über einen Kurbelarm (50) den Winkel der Schwenkwelle (46) zu steuern.

8. Erntegutbergungsvorrichtung nach Anspruch 7, **dadurch gekennzeichnet, dass** das Steuerelement (60) eine Kurvenbahn insbesondere in Form eines Kanals (66) aufweist, in die ein den Kurbelarm (50) steuernder Kurvenabnehmer (68) eingreift.

## Claims

1. A crop gathering device, especially a cutter-head (10), with a reel (24) rotatably mounted thereon, the reel being provided with at least one rotatable rockshaft (46), to which tines (48) with tips (72) are fixed, and with an adjusting device, which is arranged to alter the rotational position of the rockshaft (46) relative to the ground in dependence on the rotational position of the reel (24), wherein the adjusting device is arranged so to turn the rockshaft (46) in a first angular range of the reel (24), which corresponds to a zone of approach (B) of the tines (48) of a rockshaft (46) to a cutting device, that the tips (27) of the tines (48) move on a substantially horizontal path and in a second angular range which adjoins the first angular range is arranged so to turn the rockshaft (46) that the tines (48) are turned in the second angular range in a first direction relative to the ground, so that the tips (72) of the tines (48) are raised above the cutting device in a lift zone (C), **characterized in that** a barrier edge (23) for crop is located downstream of the cutting device and **in that** the adjusting device is arranged so to turn the rockshaft (46) in the second angular range that the tines (48) are lifted over the barrier edge (23).

2. A crop gathering device according to claim 1, according to the adjusting device is arranged to turn the rockshaft (46) in a first direction in the first angular range and in the second angular range.

3. A crop gathering device according to either of the preceding claims, **characterized in that** the adjusting device is arranged to turn the rockshaft (46) in a second direction, which is opposite to the direction of rotation in the first angular range, in a third angular range which follows the second angular range, so that the tines (48) release crop in a release zone (D) and a space between the tines (48) and an auger conveyor (18) of the crop gathering device is ensured.

4. A crop gathering device according to any of claims 1 to 3, **characterized in that** the adjusting device is arranged so to turn the rockshaft (46) that the tines (48) are at a leading angle (E) relative to radial plane (96) ofthe reel (24).

5. A crop gathering device according to any of claims 1 to 4, **characterized in that** the adjusting device is arranged so to turn that the tines (48) are turned in the second angular range at a leading angle of greater amount relative to a radial plane of the reel (24) compared with the angle (E) in the first angular range.

6. A crop gathering device according to any of claims 3 to 5, **characterized in that** the adjusting device is arranged so to turn the rockshaft (46) that the tines (48) assume an angle in the third angular range which trails relative to a radial plane (100) of the reel (24).

7. A crop gathering device according to any of claims 1 to 6, **characterized in that** the adjusting device comprises a preferably ring-formed control element (60) which is arranged to control the angle of the rockshaft (46) through a crank arm (50).

8. A crop gathering device according to claim 7, **characterized in that** the control element (60) comprises a cam track, especially in the form of a channel (66), in which a cam follower (68) controlling the crank arm (50) engages.

## Revendications

1. Dispositif de récupération de produits récoltés, notamment mécanisme de coupe (10), comprenant un rabatteur (24) monté en rotation sur celui-ci et muni d'au moins un arbre de pivotement rotatif (46), auquel sont fixées des dents (48) avec des pointes (72), et d'un dispositif de réglage, qui est prévu pour modifier la position de rotation de l'arbre de pivotement (46) par rapport au sol en fonction de la position de rotation du rabatteur (24), le dispositif de réglage étant prévu pour faire tourner l'arbre de pivotement (46) dans une première plage angulaire du rabatteur (24) correspondant à une zone d'approche (B) des dents (48) d'un arbre de pivotement (46) à un dispositif de moissonnage, de telle sorte que les pointes (72) des dents (48) se déplacent sur un chemin pour l'essentiel horizontal, et dans une deuxième plage angulaire prolongeant la première plage angulaire, de telle sorte que les dents (48) dans la deuxième plage angulaire sont tournées dans un premier sens par rapport au sol, de telle sorte que les pointes (72) des dents (48) sont soulevées dans une zone de soulèvement (C) au-dessus du dispositif de moissonnage, **caractérisé en ce qu'**en aval du dispositif de moissonnage se trouve un bord de blocage (23) pour produits récoltés, et **en ce que** le dispositif de réglage est prévu pour faire tourner l'arbre de pivotement (46) dans la deuxième plage angulaire, de telle sorte que les dents (48) sont soulevées au-dessus du bord de blocage (23).

2. Dispositif de récupération de produits récoltés selon la revendication 1, **caractérisé en ce que** le dispositif de réglage est prévu pour faire tourner l'arbre de pivotement (46) dans un premier sens dans la première plage angulaire et dans la deuxième plage angulaire.

3. Dispositif de récupération de produits récoltés selon l'une quelconque des revendications précédentes, **caractérisé en ce que** le dispositif de réglage est prévu pour faire tourner l'arbre de pivotement (46) dans une troisième plage angulaire, qui suit la deuxième plage angulaire, dans un deuxième sens opposé au sens de rotation dans la première plage angulaire, de telle sorte que les dents (48) libèrent les produits récoltés dans une zone de libération (D) et qu'une distance est assurée entre les dents (48) et un transporteur à vis (18) du dispositif de récupération de produits récoltés.

4. Dispositif de récupération de produits récoltés selon l'une des revendications 1 à 3, **caractérisé en ce que** le dispositif de réglage est prévu pour faire tourner l'arbre de pivotement (46) de manière à ce que les dents (48) dans la première et la deuxième plages angulaires se trouvent dans un angle d'avance (E) par rapport à un plan (96) radial au rabatteur (24).

5. Dispositif de récupération de produits récoltés selon l'une des revendications 1 à 4, **caractérisé en ce que** le dispositif de réglage est prévu pour faire tourner l'arbre de pivotement (46) de manière à ce que les dents (48) dans la deuxième plage angulaire sont tournées par rapport à un plan radial au rabatteur (24) dans un angle d'avance plus grand que l'angle (E) dans la première plage angulaire.

6. Dispositif de récupération de produits récoltés selon l'une des revendications 3 à 5, **caractérisé en ce que** le dispositif de réglage est prévu pour faire tourner l'arbre de pivotement (46) de manière à ce que les dents (48) dans la troisième plage angulaire forment un angle qui est en retard par rapport à un plan (100) radial au rabatteur (24).

7. Dispositif de récupération de produits récoltés selon l'une des revendications 1 à 6, **caractérisé en ce que** le dispositif de réglage comprend un élément de commande (60) de préférence annulaire, qui est prévu pour commander l'angle de l'arbre de pivotement (46) à l'aide d'un bras de manivelle (50).

8. Dispositif de récupération de produits récoltés selon la revendication 7, **caractérisé en ce que** l'élément de commande (60) présente un chemin incurvé, notamment sous la forme d'un canal (66), dans lequel est engagé un preneur de courbe (68) commandé par le bras de manivelle (50).
